# EUROPEAN PATENT SPECIFICATION

(11) **EP 1 238 519 B1**
(45) Date of publication and mention of the grant of the patent: **23.03.2005**
(21) Application number: 00990127.3
(22) Date of filing: 04.12.2000
(51) Int. Cl.: H04M 1/57

(54) **METHOD AND SYSTEM FOR PLACING A TELEPHONE CALL**
VERFAHREN UND GERÄT ZUM AUFBAU EINES TELEFONANRUFES
PROCEDE ET SYSTEME PERMETTANT D'ACHEMINER UN APPEL TELEPHONIQUE

(30) Priority: 02.12.1999 NL 1013721; 18.02.2000 NL 1014418
(43) Date of publication of application: 11.09.2002
(73) Proprietor: Verspaget, Josephus Franciscus Berendina, 3523 TV Utrecht (NL)
(72) Inventor: Verspaget, Josephus Franciscus Berendina, 3523 TV Utrecht (NL)
(74) Representative: Prins, Adrianus Willem, Mr. Ir.
(86) International application number: PCT/NL2000/000889
(87) International publication number: WO 2001/041405

(56) References cited:
- EP-A- 0 641 141
- EP-A- 0 869 688
- WO-A-01/19093
- WO-A-98/05151
- DE-U- 29 821 998
- FR-A- 2 618 281
- US-A- 5 724 412
- US-A- 5 907 604
- US-A- 5 946 684

## Description

This invention relates to a method for placing a telephone call, comprising a transmitting section of a telephone apparatus establishing a connection with a given receiving section of a telephone apparatus, as well as to a telephone system comprising at least one first telephone apparatus provided with at least one transmitting section and at least one second telephone apparatus provided with at least one receiving section, while the at least one transmitting section and the at least one receiving section are provided with respective communication means arranged for establishing a telephone connection.

Such systems are known from practice for, for instance, cellular telephones. These cellular telephones are provided with a number of different acoustic alerting signals, such as, for instance, bleep signals of a different tone, which are produced by the telephone when a call is being placed. The cellular telephone is further provided with a memory in which the user has entered a number of telephone numbers, which the user has coupled to a particular alerting signal. If the cellular telephone is called by a telephone associated with one of the stored telephone numbers, the cellular telephone produces the alerting signal associated with the number in question. Thus, the user can hear by the alerting signal by whom he is being called.

A disadvantage of this system, however, is that the number of available different alerting signals is limited and that entering the telephone numbers and the associated alerting signals is laborious, in particular if a given caller utilizes several telephones. Another disadvantage is that per telephone number only a single alerting signal can be indicated; consequently, this system does not enable a distinction to be obtained if several users utilize a single telephone number.

European patent application EP 0869688 describes an information transmission system, comprising a first terminal, a second terminal and means for setting up a communication connection between the first and second terminal. Communication connection set-up means have been arranged to transmit a CLIP (Calling Line Identification Presentation) information of the first terminal to the second terminal. A server is provided, which is connected to the communication connection for storing and further transmitting service pages. The server comprises a reference database wherein a number of Internet addresses corresponding to CLIP identifiers of different subscribers have been stored. During use, after having received the CLIP information of a subscriber A, a subscriber B contacts the server through the network and transmits to it the CLIP information. On the basis of this, the server transmits to the subscriber B the address of the service page of the subscriber A. After that, the subscriber B retrieves from an Internet address it has received, the service page of subscriber A.

US patent 5,724,412 describes a method and system for providing a telephony subscriber with Internet information related to a caller attempting to call the subscriber. The internet information is provided to customer premises equipment of the subscriber during the first and second ring of a call. Subsequently, if the call is not completed, the caller's Internet information is accessible at a later time, along with any corresponding voice mail associated with the call and any caller-ID information such as the caller's name and/or telephone number.

The not pre-published international patent application WO01/19093 describes a method for call control by a called terminal device receiving a call via a communication network for intelligent network services. The method comprises the triggering of the presentation of information identifying a calling user of a terminal device to a called terminal device upon receipt of an incoming call, and, if triggered, presenting said information to a user of said called terminal device. In a sub-embodiment, the generation of content generated in a WAP server involves the retrieval of content from several sources that are determined from call set-up information.

The present invention provides a method according to the features of claim 1.

The invention further provides a telephone call system of the type indicated above, characterized by the features of claim 8.

The invention further provides a telephone apparatus characterized by the features of claim 13.

The invention is further embodied in a computer program arranged for carrying out the method according to the invention.

The invention will be further elucidated on the basis of a detailed description of an exemplary embodiment of the invention, with reference to the drawing. In the drawing:
Fig. 1 schematically shows a transmitter,
Fig. 2 schematically shows a receiver and
Fig. 3 schematically shows a calling file

In the following, according to the invention, audiovisual information is understood to mean information which represents audio information, visual information, or a combination of visual and audio information. Visual information is understood to encompass both still images (such as, for instance, logos, devices, and photos) and moving images (such as, for instance, film).

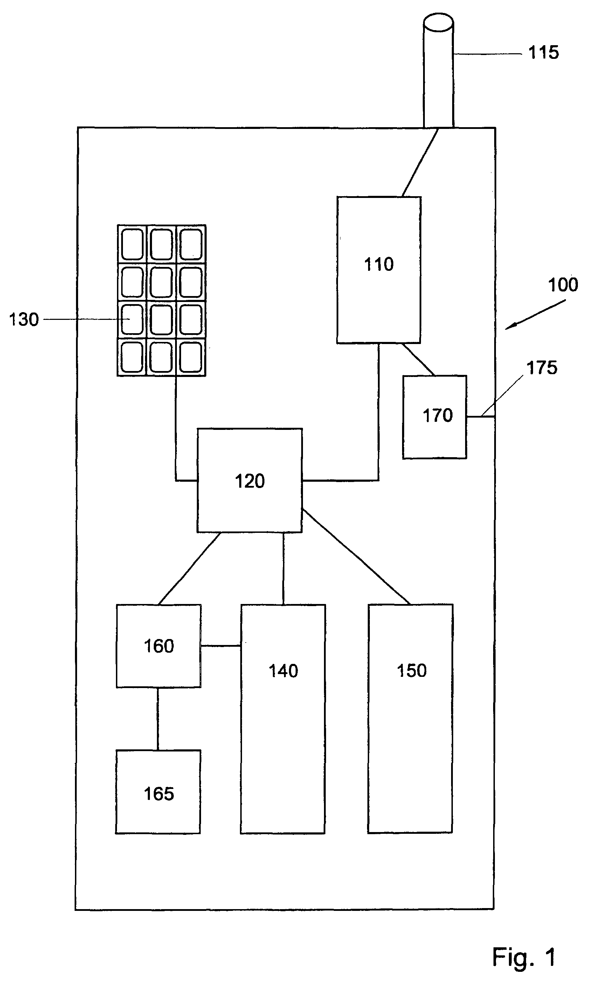

Fig. 1 shows an exemplary embodiment of a cellular telephone 100 according to the invention, which, in this example, functions as transmitter. This cellular telephone 100 is provided with a communication unit 110, arranged for establishing a connection with another telephone. The communication unit 110 is provided with an antenna 115. Such communication units for cellular telephones are known from practice, so that, for the sake of brevity, a detailed description can be omitted.

In this exemplary embodiment, by way of example, audio information is used for the call message. The invention is not limited to this exemplary embodiment and the invention can also be used with a call message with audiovisual information such as audio information, visual information or a combination of visual and audio information.

The telephone 100 is further provided with a control unit 120, arranged for controlling the operation of the telephone 100 and connected with the communication unit 110. The control unit 120 is further connected with a key panel 130, which can be operated by a user for giving commands to the control unit 120. The telephone 100 is further provided with an audio memory 140 which is connected with the control unit 120. The audio memory 140 is arranged for storing audio information. The telephone 100 is provided with a number memory 150, in which home address data, such as name, street name and number, and telephone number can be stored by a user. The number memory 150 is connected with the control unit 120.

The telephone 100 is provided with a recording device 160, which is provided with a microphone 165. This microphone 165 is positioned such that voice and/or other audio information of a user of the telephone 100 can be captured for subsequent relay of the electrical signals generated thereby to the recording device 160. In this example, the recording device 160 is arranged, through sampling, to convert the sounds captured by the microphone 165 and converted into electrical signals, into digital form. Thus, a computer file with audio information is created. Such devices for recording sound in digital form are known from practice. In an advantageous variant embodiment of the example, for the microphone 165, use can be made of the microphone conventionally present in a telephone apparatus.

The telephone 100 is further provided with an input unit 170, which is connected with the communication unit 110. The input unit 170 is arranged for receiving audiovisual data from a source such as, for instance, a CD player or mini disk player. To that end, the input unit 170 is provided with inputs 175, arranged for connecting audio sources, for instance via an analog or digital line connection. The audio information inputted via the input unit 170 is stored in the audio memory 140 via the communication unit 110 and the control unit 120. Via the inputs 175 or via the communication means 110, the input unit 170 can establish a connection with a network, such as, for instance, the Internet, to download audio information from the network and to store it in the audio memory 140. The input unit 170 can also be arranged for receiving visual information.

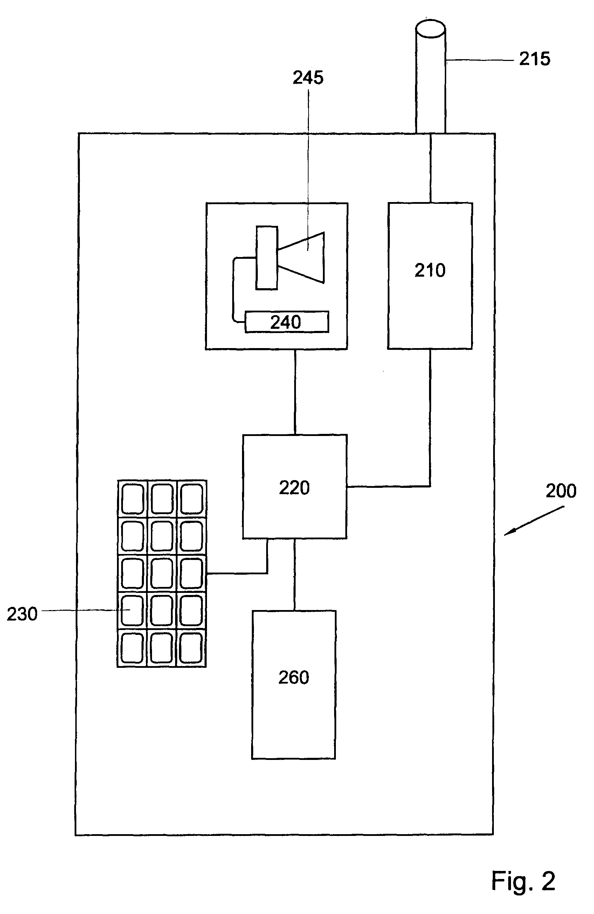

Fig. 2 shows a second cellular telephone 200, which, in this example, functions as receiver for the telephone 100. The cellular telephone 200 is provided with a communication unit 210, arranged for establishing a connection with another telephone, in this example the telephone 100. The communication unit 210 is provided with an antenna 215. Such communication units for cellular telephones are known from practice, so that, for the sake of brevity, a detailed description can be omitted.

The telephone 200 is further provided with a control unit 220, arranged for controlling the operation of the telephone 200 and connected with the communication unit 210. The control unit 220 is further connected with a key panel 230, which can be operated by a user for giving commands to the control unit 220. The telephone 200 is further provided with a cache memory 260, which is connected with the control unit 220. The cache memory 260 is arranged for storing audio information and identification data associated with audio information.

The telephone 200 is further provided with reproduction means for converting information into signals sensorially perceptible by a user, in this example in the form of a loudspeaker unit 240, which is provided with a loudspeaker 245. The loudspeaker unit 240 is connected with the control unit 220 and.is arranged to receive audio information in digital form from the control unit 220 and to convert this information into electrical signals which can be converted into sound by the loudspeaker 245. Such systems for acoustic reproduction of digital audio information are known from practice, so that a detailed description thereof can be omitted. In case the calling information also comprises visual information, the reproduction means can be provided with a visual converter such as, for instance, a light or display. In particular, use can then be made of a display of a cellular telephone.

In the following, a practical example will be described. A user of the telephone 100 records a call message by way of the microphone 165 and the recording device 160. The call message can be formed, for instance, by spoken word, such as, for instance, the name of the user, or, for instance, music, such as a recognition melody. If desired, the call message can be provided with graphic information such as, for instance, stationary or moving images. The call message is converted into digital audio data by the recording device 160 and stored via the control unit 120 in the audio memory 140. According to the invention, any storage format for audio data can be utilized, for instance the MP3, MPEG or WAVE format. The invention also provides for the use of formats for storing musical data such as, for instance, the MIDI format. If according to the invention visual data are also included in the call message, in a corresponding manner any digital storage format suitable for the purpose can be used, such as, for instance, JPEG, MPEG, and GIF.

In addition, the invention provides for the reproduction of audiovisual information through reference data, such as, for instance, hyperlinks, the hyperlink comprising data through which the indicated audiovisual information can be found. As a result, the associated claim on the storage capacity of the telephone is only small. If desired, the user, via the input unit 170, can also derive audiovisual information from a different source, for instance via a CD player or the Internet.

Next, the user, by means of the key panel 130, selects a telephone number of a telephone with which the user wishes to establish communication. To that end, the user can specify a telephone number directly to the control unit 120 or select a number from the data stored in the number memory 150. Thereafter the user indicates which call message he wishes to use in making the connection. For this purpose, the user can choose from audio data stored in the audio memory 140. If desired, the user can indicate in the number memory 150 a particular choice of a call message in association with a particular number, so that this call message is used every time with the number in question.

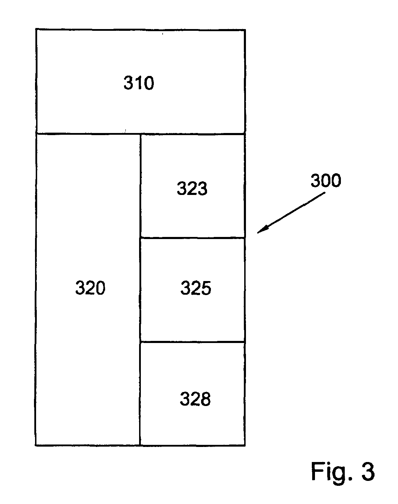

On the basis of the telephone number selected by the user and the call message selected by the user, the control unit 120 determines the calling information, for instance in the form of a calling file 300 as shown in Fig. 3. The calling file 300 comprises identification data 310 and audio data 320. The identification data 310 can comprise a unique identification number to indicate the audio data 320, a sign for indicating the storage format used for the audio data 320, as well as an identifier for the user.

The communication unit 110 proceeds to seek communication with the receiving telephone 200 selected by the user. The receiver 200 is arranged such that making the connection takes place without the receiving party needing to take action, for instance picking up the telephone. After the connection has been established between the respective communication units 110 and 210, the control unit 120 transmits the calling file 300 via the communication units 110, 210 to the control unit 220. The control unit 220 reads the identification data 310 of the calling file 300 and stores it in the cache memory 260. The control unit 220 proceeds to read the audio data 320 of the calling file 300 and likewise stores it in the cache memory 260 together with the associated identification data 310. Next, the audio data 320 are passed on to the loudspeaker unit 240 which converts the audio data into acoustic signals; thus the receiving party can hear the call message of the transmitting party. If desired, the recipient, for instance because he does not want to be disturbed, can set the control unit 220 to reproduce acoustic signals only after a command from the recipient, such as, for instance, pressing a key on the panel 230. In a further variant embodiment according to the invention, the control unit 220 can draw the user's attention to the fact that a message has been received by means of a vibrating signal.

After the complete calling file 300 has been transferred, the control unit 220 can, if desired, break the connection with the transmitting apparatus or return it to the so-called "knocking" state, which is the condition in which the transmitter is trying to establish a connection with the receiver, meanwhile waiting for the recipient to pick up the phone. The control unit then continues to reproduce the audio data 320 via the loudspeaker unit 240, until the user picks up the phone to conduct a conversation or discontinues the reproduction through a command. Of advantage here is the fact that the time during which an actual communication connection exists is reduced, thus obviating needless loading of the communication network.

If desired, the user can have the audio data 320 played by the loudspeaker unit 240 during the transfer of the audio data 320, which may be advantageous if the transfer of data takes relatively long. The control unit 220 is then arranged such that upon a command from the user, for instance via the key panel 230, the input of the audio data can be interrupted and the connection, if desired, can be broken or converted to a connection suitable for conducting a conversation.

The receiving control unit 220 is arranged, when receiving calling information 300, to check first on the basis of the identification data 310 whether the associated audio information 320 is already stored in the cache memory 260, which can be the case, for instance, if the transmitting party has sent the same calling information to the receiving party before. If the audio information 320 is already present in the cache memory 260, the control unit 220 does not receive the audio data, but the control unit 220 feeds the audio data already stored to the loudspeaker unit 240. The duration of communication is thereby reduced.

The control unit 220 is arranged upon user request to remove audio information stored in the cache memory; if desired, such erasure can take place automatically at the moment when the audio information does not need to be used anymore. By erasing the audio information, the memory capacity of the telephone is optimally utilized and audio information that may be undesired by the user does not remain stored in the memory.

Although in the foregoing exemplary embodiment reference has been made to an audio memory, the invention is not limited thereto and the invention also provides a memory in which other data in digital form, such as visual data and reference data, can be stored.

Although in the foregoing the telephones 100 and 200 have been described with functions for transmission and reception, respectively, the invention is not in any way limited to this embodiment. In particular, the invention envisages accommodation of the transmission and reception functions in a single telephone apparatus according to the invention, so that this telephone is capable of both transmission and reception.

According to the invention, there is provided a central memory, which is included in a network, such as, for instance, a computer, telephone or data network. According to the invention, the central memory can be implemented in any suitable manner. In a manner suitable for the purpose, a user can send a call message created by the user, with sound and/or image in digital form, via the network to the central memory; for this purpose, the user can utilize, for instance, a telephone as described above, with the communication means of the telephone arranged accordingly, or a personal computer. The call message is then stored in the central memory and the user receives a unique identification code for the call message in question. This unique identification code can then, for instance, be stored in the memory of the telephone apparatus of the user. The unique identification code can subsequently be incorporated into the calling information; the calling information can comprise, for instance, a hyperlink with the location of the central memory within the network and the identification code. On the basis of the unique identification code incorporated into the calling information, which therefore functions as audiovisual information, the receiver, which has access to the central memory, can obtain the associated call message via the network from the central memory and, for instance, execute same in the above-described manner. To that end, the communication means of the receiving telephone can be arranged for making contact with the central memory. This lends itself in particular for use with existing telephones, since it entails little or no claim on the hardware, and in particular on the memory capacity, of the telephone.

In a further variant embodiment of the invention, the receiver is provided with an address memory in which addresses of specific users are stored. The control unit is arranged, when calling information comes in, to determine on the basis of the identity data comprised therein, whether the caller is present in the address memory. If the data of the caller are present in the address memory, the control unit relays the audio information of the calling data to the loudspeaker unit. Thus, a recipient can compile a list of familiar persons to whose audio information the recipient wishes to listen. What is thus achieved is that the recipient only gets to hear the audio information that is important to him.

In a further variant embodiment of the invention, the control unit 220 of the receiving apparatus 200 is equipped with a selection unit with which the user can set the control unit 220 for handling the incoming messages in the manner desired by him. For instance, the user can elect, upon receipt of a call provided with calling information: a. to reproduce the audio information comprised in the calling information directly in the manner described above; b. to receive the calling information and to store it in the cache memory, and to draw the user's attention to the stored calling information by means of non-auditory signals, such as a vibrating signal; c. to receive the call message and to store it in the cache memory without drawing the user's attention to the received information. With option c. the user can, upon command, have the control unit 220 acoustically reproduce the received information in the manner described above.

Although in the example cellular telephones have been assumed, the invention is not limited to this application; the invention can also be used with telephone apparatuses which are directly connected with a public switched telephone network.

Usually, cellular telephones are provided with a computer or microprocessor which is provided with a memory with software for operating the different parts of the telephone, such as the communication device, the display, and the key panel. The invention provides a computer program that is arranged for carrying out the method according to the invention when this program is executed by the computer or microprocessor of the cellular telephone. Use can then be made of the facilities already present in the telephone, such as loudspeaker, microphone and key panel. Through this embodiment of the invention, the favorable effects of the invention can be obtained by introducing a program according to the invention in the memory of an existing cellular telephone. Such an adaptation of the software is simple to carry out without performing complex hardware changes on the telephone.

The invention further provides a computer program product on which, in a computer-readable form, a computer program according to the invention has been provided. To that end, for instance, the computer program can be placed on a CD ROM, floppy disk, magnetic tape, optical disk, ROM memory, or a corresponding computer-readable storage medium. Such a program according to the invention is then transferred in a manner suitable for the purpose onto an operating computer in a cellular telephone, for instance according to the Wireless Application Protocol (WAP).

## Claims

1. A method for placing a telephone call in a telephone network, comprising:
a transmitting section of a first telephone apparatus establishing a connection with a given receiving section of a second telephone apparatus,
providing a central memory;
storing a call message, with audiovisual information, in the central memory;
providing to a user a unique identification code for the call message in question;
transferring predetermined calling information (300) comprising at least the unique identification code and a hyperlink with the location of the central memory within the network, from the first telephone apparatus to the receiving section of the second telephone apparatus, which second telephone apparatus has access to the central memory;
obtaining by the second telephone apparatus selected audiovisual information (320, 323, 325, 328) from the central memory on the basis of the unique identification code; and
converting the selected audiovisual information (320, 323, 325, 328) in the receiving section of the second telephone apparatus into signals perceptible by the senses.

2. A method according to claiml , **characterized by** the steps of incorporating identity data (310) into the calling information (300), and the receiving section of the second telephone apparatus storing the calling information (300) in a memory (260).

3. A method according to claim 2, **characterized by** the steps of
the receiving section of the second telephone apparatus storing audiovisual information coupled to identity data in a memory, and
the receiving section of the second telephone apparatus selecting, on the basis of calling information (300) transferred by the transmitting section and the identity data (310) incorporated in the calling information (300), the associated selected audiovisual information stored in the memory.

4. A method according to any one of claims 2 or 3, **characterized by** the step of the receiving section of the second telephone apparatus converting the selected audiovisual information (320, 323, 325, 328) into signals perceptible by the senses after a command from an user.

5. A method according to any one of the preceding claims, **characterized by** the steps of transferring selected audiovisual information (320, 323, 325, 328) via a network to the transmitting section, and storing the transferred audiovisual information (320, 323, 325, 328) in a memory (140).

6. A method according to any of the preceding claims, wherein the user sends a call message created by the user, via the network to the central memory, utilizing a telephone.

7. Method according to any of the preceding claims, wherein the identification code is stored in the memory of the telephone apparatus of the user.

8. A telephone system comprising,
at least one first telephone apparatus (100) provided with at least one transmitting section, a central memory arranged for the storage of a call message with audiovisual information, and at least one second telephone apparatus (200) provided with at least one receiving section, while the at least one transmitting section and the at least one receiving section are provided with respective communication means (110, 115, 210, 215) arranged for establishing a telephone connection,
wherein the at least one first telephone apparatus (100) is provided with a memory for storing a unique identification code provided to a user for the call message in question , and
wherein the communication means (110, 115) of the at least one first telephone apparatus (100) are arranged for transferring predetermined calling information (300) comprising the unique identification code and a hyperlink with the location of the central memory within the network, to the second telephone apparatus, and
the second telephone apparatus has access to the central memory and is arranged for obtaining from the central memory selected audiovisual information on the basis of the unique identification code.

9. A system according to claim 8, **characterized in that** the communication means (210, 215) of the at least one second telephone apparatus (200) are arranged for converting audiovisual information (320, 323, 325, 328) into signals perceptible by the senses.

10. A system according to claim 8, **characterized in that** the at least one second telephone apparatus (200) is provided with a memory (260) for the storage of received calling information.

11. A system according to claim 10, **characterized in that** the memory (260) of the at least one second telephone apparatus (200) is arranged for storing identity data comprised in the calling information.

12. A system according to any of claims 8-11, wherein the system comprises a telephone for sending a call message, with audiovisual information, created by the user, via the network to the central memory.

13. A telephone apparatus provided with at least transmitting means for use in a telephone system according to any one of claims 8-12, the transmitting means being provided with:
respective communication means (110, 115, 210, 215) arranged for establishing a telephone connection with a second telephone apparatus (200), and
a memory for storing a unique identification code provided to an user, for audio-visual information in a central memory, and
wherein the communication means are arranged for transferring predetermined calling information (300) comprising the unique identification code and a hyperlink with the location of the central memory within the network, to the second telephone apparatus (200).

14. A computer program with instructions arranged for carrying out a method according to any one of claims 1-7 when said program is executed by a computer.

15. A computer program according to claim 14, stored on a computer readable storage medium.

## Patentansprüche

1. Verfahren zum Anmelden eines Telefonanrufs in einem Fernsprechnetz, das Folgendes umfasst:
einen Sendeteil eines ersten Fernsprechapparats, der eine Verbindung mit einem bestimmten Empfangsteil eines zweiten Fernsprechapparats herstellt;
Bereitstellen eines Zentralspeichers;
Speichern einer Anrufnachricht mit audiovisuellen Informationen in dem Zentralspeicher;
Bereitstellen eines eindeutigen Identifizierungscodes für die betreffende Anrufnachricht für einen Benutzer;
Übertragen vorgegebener Anrufinformationen (300), die mindestens den eindeutigen Identifizierungscode und einen Hyperlink mit der Lage des Zentralspeichers in dem Netz umfassen, von dem ersten Fernsprechapparat zu dem Empfangsteil des zweiten Fernsprechapparats, wobei der zweite Fernsprechapparat Zugriff auf den Zentralspeicher hat;
Erhalten von ausgewählten audiovisuellen Informationen (320, 323, 325, 328) mit dem zweiten Fernsprechapparat von dem Zentralspeicher aufgrund des eindeutigen Identifizierungscodes und
Umwandeln der ausgewählten audiovisuellen Informationen (320, 323, 325, 328) in dem Empfangsteil des zweiten Fernsprechapparats in mit den Sinnen wahrnehmbare Signale.

2. Verfahren nach Anspruch 1, **gekennzeichnet durch** die Schritte
Integrieren von Identitätsdaten (310) in die Anrufinformationen (300) und
Speichern der Anrufinformationen (300) mit dem Empfangsteil des zweiten Fernsprechapparats in einem Speicher (260).

3. Verfahren nach Anspruch 2, **gekennzeichnet durch** die Schritte
Speichern von mit Identitätsdaten verbundenen audiovisuellen Informationen mit dem Empfangsteil des zweiten Fernsprechapparats in einem Speicher und
Auswählen der zugeordneten ausgewählten audiovisuellen Informationen, die in dem Speicher gespeichert sind, mit dem Empfangsteil des zweiten Fernsprechapparats aufgrund der von dem Sendeteil übertragenen Anrufinformationen (300) und der in die Anrufinformationen (300) integrierten Identitätsdaten (310).

4. Verfahren nach einem der Ansprüche 2 oder 3, **gekennzeichnet durch** den Schritt Umwandeln der ausgewählten audiovisuellen Informationen (320, 323, 325, 328) mit dem Empfangsteil des zweiten Femsprechapparats in mit den Sinnen wahrnehmbare Signale nach einem Befehl von einem Benutzer.

5. Verfahren nach einem der vorhergehenden Ansprüche, **gekennzeichnet durch** die Schritte
Übertragen ausgewählter audiovisueller Informationen (320, 323, 325, 328) über ein Netz zu dem Sendeteil und
Speichern der übertragenen audiovisuellen Informationen (320, 323, 325, 328) in einem Speicher (140).

6. Verfahren nach einem der vorhergehenden Ansprüche, **dadurch gekennzeichnet, dass** der Benutzer eine von dem Benutzer erzeugte Anrufnachricht unter Verwendung eines Fernsprechapparats über das Netz zu dem Zentralspeicher sendet.

7. Verfahren nach einem der vorhergehenden Ansprüche, **dadurch gekennzeichnet, dass** der Identifizierungscode in dem Speicher des Fernsprechapparats des Benutzers gespeichert wird.

8. Fernsprechanlage mit
mindestens einem ersten Fernsprechapparat (100), der mit mindestens einem Sendeteil versehen ist;
einem zum Speichern einer Anrufnachricht mit audiovisuellen Informationen eingerichteten Zentralspeicher und
mindestens einem zweiten Fernsprechapparat (200), der mit mindestens einem Empfangsteil versehen ist,
wobei der mindestens eine Sendeteil und der mindestens eine Empfangsteil mit entsprechenden Kommunikationsmitteln (110, 115, 210, 215) versehen sind, die zum Herstellen einer Fernsprechverbindung eingerichtet sind,
**dadurch gekennzeichnet, dass**
der mindestens eine erste Fernsprechapparat (100) mit einem Speicher zum Speichern eines eindeutigen Identifizierungscodes versehen ist, der für die betreffende Anrufnachricht für einen Benutzer bereitgestellt wird, und
die Kommunikationsmittel (110, 115) des mindestens einen ersten Fernsprechapparats (100) zum Übertragen vorgegebener Anrufinformationen (300), die den eindeutigen Identifizierungscode und einen Hyperlink mit der Lage des Zentralspeichers in dem Netz umfassen, zu dem zweiten Fernsprechapparat eingerichtet sind, und
der zweite Fernsprechapparat Zugriff auf den Zentralspeicher hat und zum Erhalten ausgewählter audiovisueller Informationen von dem Zentralspeicher aufgrund des eindeutigen Identifizierungscodes eingerichtet ist.

9. Anlage nach Anspruch 8, **dadurch gekennzeichnet, dass** die Kommunikationsmittel (210, 215) des mindestens einen zweiten Fernsprechapparats (200) zum Umwandeln audiovisueller Informationen (320, 323, 325, 328) in mit den Sinnen wahrnehmbare Signale eingerichtet sind.

10. Anlage nach Anspruch 8, **dadurch gekennzeichnet, dass** der mindestens eine zweite Fernsprechapparat (200) mit einem Speicher (260) zum Speichern von empfangenen Anrufinformationen versehen ist.

11. Anlage nach Anspruch 10, **dadurch gekennzeichnet, dass** der Speicher (260) des mindestens einen zweiten Fernsprechapparats (200) zum Speichern von in den Anrufinformationen enthaltenen Identitätsdaten eingerichtet ist.

12. Anlage nach einem der Ansprüche 8 - 11, **dadurch gekennzeichnet, dass** die Anlage einen Fernsprechapparat zum Senden einer von dem Benutzer erzeugten Anrufnachricht mit audiovisuellen Informationen über das Netz zu dem Zentralspeicher aufweist.

13. Fernsprechapparat, der zumindest mit Sendemitteln versehen ist, zur Verwendung in einer Fernsprechanlage nach einem der Ansprüche 8 - 12, wobei die Sendemittel mit
entsprechenden Kommunikationsmitteln (110, 115, 210, 215), die zum Herstellen einer Fernsprechverbindung mit einem zweiten Fernsprechapparat (200) eingerichtet sind, und
einem Speicher zum Speichern eines für einen Benutzer bereitgestellten eindeutigen Identifizierungscodes für audiovisuelle Informationen in einem Zentralspeicher,
versehen sind und wobei die Kommunikationsmittel zum Übertragen vorgegebener Anrufinformationen (300), die den eindeutigen Identifizierungscode und einen Hyperlink mit der Lage des Zentralspeichers in dem Netz umfassen, zu dem zweiten Fernsprechapparat (200) eingerichtet sind.

14. Computerprogramm mit Befehlen, das zum Durchführen eines Verfahrens nach einem der Ansprüche 1 - 7 eingerichtet ist, wenn das Programm von einem Computer abgearbeitet wird.

15. Computerprogramm nach Anspruch 14, das auf einem maschinenlesbaren Speichermedium gespeichert ist.

## Revendications

1. Procédé pour acheminer un appel téléphonique dans un réseau téléphonique, comprenant :
une section d'émission d'un premier appareil téléphonique établissant une connexion avec une section de réception donnée d'un second appareil téléphonique,
fournir une mémoire centrale ;
mémoriser un message d'appel, avec des informations audiovisuelles, dans la mémoire centrale ;
fournir à un utilisateur un code d'identification unique pour le message d'appel en question ;
transférer les informations d'appel (300) comprenant au moins le code d'identification unique et un hyperlien avec la position de la mémoire centrale à l'intérieur du réseau, du premier appareil téléphonique à la section de réception du second appareil téléphonique, lequel second appareil téléphonique a accès à la mémoire centrale ;
obtenir par le second appareil téléphonique des informations audiovisuelles sélectionnées (320, 323, 325, 328) à partir de la mémoire centrale sur la base du code d'identification unique ; et
convertir les informations audiovisuelles sélectionnées (320, 323, 325, 328) dans la section de réception du second appareil téléphonique en signaux perceptibles par les sens.

2. Procédé selon la revendication 1, **caractérisé par** les étapes consistant à incorporer des données d'identité (310) dans les informations d'appel (300), et la section de réception du second appareil téléphonique mémorisant les informations d'appel (300) dans une mémoire (260).

3. Procédé selon la revendication 2, **caractérisé par** les étapes consistant à
ce que la section de réception du second appareil téléphonique mémorise les informations audiovisuelles couplées aux données d'identité dans une mémoire, et
la section de réception du second appareil téléphonique sélectionne, sur la base des informations d'appel (300) transférées par la section d'émission et des données d'identité (310) incorporées dans les informations d'appel (300), les informations audiovisuelles sélectionnées associées mémorisées dans la mémoire.

4. Procédé selon l'une quelconque des revendications 2 ou 3, **caractérisé par** l'étape consistant à ce que la section de réception du second appareil téléphonique convertisse les informations audiovisuelles sélectionnées (320, 323, 325, 328) en signaux perceptibles par les sens après un ordre provenant d'un utilisateur.

5. Procédé selon l'une quelconque des revendications précédentes, **caractérisé par** les étapes consistant à transférer les informations audiovisuelles sélectionnées (320, 323, 325, 328) via un réseau à la section d'émission, et à mémoriser les informations audiovisuelles transférées (320, 323, 325, 328) dans une mémoire (140).

6. Procédé selon l'une quelconque des revendications précédentes, dans lequel l'utilisateur envoie un message d'appel créé par l'utilisateur, via le réseau à la mémoire centrale, en utilisant un téléphone.

7. Procédé selon l'une quelconque des revendications précédentes dans lequel le code d'identification est mémorisé dans la mémoire de l'appareil téléphonique de l'utilisateur.

8. Système téléphonique comprenant,
au moins un premier appareil téléphonique (100) muni d'au moins une section d'émission, une mémoire centrale conçue pour la mémorisation d'un message d'appel avec des informations audiovisuelles, et au moins un second appareil téléphonique (200) muni d'au moins une section de réception, tandis que la au moins une section d'émission et la au moins une section de réception sont munies de moyens de communication respectifs (110, 115, 210, 215) conçus pour établir une connexion téléphonique,
dans lequel le au moins un premier appareil téléphonique (100) est muni d'une mémoire pour mémoriser un code d'identification unique fourni à un utilisateur pour le message d'appel en question, et
dans lequel les moyens de communication (110, 115) d'au moins un premier appareil téléphonique (100) sont conçus pour transférer des informations d'appel prédéterminées (300) comprenant le code d'identification unique et un hyperlien avec la position de la mémoire centrale à l'intérieur du réseau, au second appareil téléphonique, et
le second appareil téléphonique a accès à la mémoire centrale et est conçu pour obtenir à partir de la mémoire centrale des informations audiovisuelles sélectionnées à partir de la base du code d'identification unique.

9. Système selon la revendication 8, **caractérisé en ce que** les moyens de communication (210, 215) du au moins second appareil téléphonique (200) sont conçus pour convertir les informations audiovisuelles (320, 323, 325, 328) en signaux perceptibles par les sens.

10. Système selon la revendication 8, **caractérisé en ce que** le au moins second appareil téléphonique (200) est muni d'une mémoire (260) pour la mémorisation des informations de l'appel.

11. Système selon la revendication 10, **caractérisé en ce que** la mémoire (260) du au moins second appareil téléphonique (200) est conçue pour mémoriser les données d'identité comprises dans les informations d'appel.

12. Système selon l'une quelconque des revendications 8 à 11, dans lequel le système comprend un téléphone pour envoyer un message d'appel, avec des informations audiovisuelles, créées par l'utilisateur, via le réseau à la mémoire centrale.

13. Appareil téléphonique muni d'au moins un moyen d'émission pour utilisation dans un système téléphonique selon l'une quelconque des revendications 8 à 12, le moyen d'émission étant muni de :
des moyens de communication respectifs (110, 115, 210, 215) conçus pour établir une connexion téléphonique avec un second appareil téléphonique 200, et
une mémoire pour mémoriser un code d'identification unique fourni à un utilisateur, pour les informations audiovisuelles dans une mémoire centrale, et dans laquelle les moyens de communication sont conçues pour transférer des informations d'appel prédéterminées (300) comprenant le code d'identification unique et un hyperlien avec la position de la mémoire centrale à l'intérieur du réseau, au second appareil téléphonique (200).

14. Programme d'ordinateur avec des instructions conçues pour effectuer un procédé selon l'une quelconque des revendications 1 à 7, lorsque ledit programme est exécuté par un ordinateur.

15. Programme d'ordinateur selon la revendication 14, mémorisé sur un support de mémorisation lisible par ordinateur.
